Europäisches Patentamt

European Patent Office

Office européen des brevets

(11) Veröffentlichungsnummer: **0 009 496**
B1

(12) **EUROPÄISCHE PATENTSCHRIFT**

(45) Veröffentlichungstag der Patentschrift:
25.11.81

(21) Anmeldenummer: 79900185.4

(22) Anmeldetag: 12.02.79

(86) Internationale Anmeldenummer:
PCT/DE 79/00015

(87) Internationale Veröffentlichungsnummer:
WO 79/00656 (06.09.79 Gazette 79/18)

(51) Int. Cl.³: **F 16 L 51/04** // G21C13/04

(54) **MEHRSCHALIGER ROHRBOGEN.**

(30) Priorität: 23.02.78 DE 2807773
06.11.78 DE 2848111

(43) Veröffentlichungstag der Anmeldung:
16.04.80 Patentblatt 80/8

(45) Bekanntmachung des Hinweises auf die Patenterteilung:
25.11.81 Patentblatt 81/47

(84) Benannte Vertragsstaaten:
CH FR GB LU SE

(56) Entgegenhaltungen:
FR-A-2 173 276
**Journal of the British Nuclear Energy Society,
Band 14, No. 1, veröffentlicht Januar 1975, P. H.
Margen, S. Menon: »PCRVs for BWRs — a new
dimension in LWR exploitation«**

(73) Patentinhaber: **INTERATOM Internationale
Atomreaktorbau GmbH, Friedrich-Ebert-Strasse,
D-5060 Bergisch Gladbach 1 (DE)**

(72) Erfinder: **JANSING, Walter, Diakonissenweg 26,
D-5060 Bergisch Gladbach 1 (DE)**

(74) Vertreter: **Mehl, Ernst, Dipl.-Ing., Postfach 22 01 76,
D-8000 München 22 (DE)**

## Mehrschaliger Rohrbogen

Die vorliegende Erfindung betrifft eine Bogenverbindung zweier im Winkel zueinander angeordneter Rohrleitungen bzw. einer Rohrleitung mit einem Behälter. Beim Bau von Anlagen, deren einzelne Teile durch Rohrleitungen miteinander verbunden werden, ist man allgemein aus strömungstechnischen und Kostengründen bestrebt, mit möglichst kurzen Rohrleitungen auszukommen und zu diesem Zweck so kompakt zu bauen, wie es mit Rücksicht auf andere wichtige Gesichtspunkte, z. B. die Zugänglichkeit für Überwachung und Reparaturen möglich ist. Dieser Gesichtspunkt gilt verstärkt in kerntechnischen Anlagen und hier wiederum besonders für den Primärbereich eines Kernreaktors, unter anderem um die aufwendige Strahlenabschirmung so gering an Umfang wie möglich zu halten. Diesen Gesichtspunkten steht die Notwendigkeit entgegen, für den Abbau der Spannungen zu sorgen, die durch die Wärmedehnung der Rohrleitungen selbst und der durch sie verbundenen Anlagenteile hervorgerufen werden. Bei kerntechnischen Anlagen mit ihrer mehrere hundert Grad Celsius betragenden Betriebstemperatur können die Wärmedehnungen ein beträchtliches Maß erreichen, was zu einer »weichen« Verlegung der Rohrleitungen zwingt. Der Ausgleich kann in sicherheitstechnisch weniger empfindlichen Bereichen durch Wellrohrkompressoren erfolgen, deren Einsatz im Primärkreislauf von Kernreaktoren jedoch auf Bedenken stößt. Es gibt hier nur die Möglichkeit, die Rohrleitungen mit einer Ausdehnungsmöglichkeit in Form von Schleifen zu versehen, die jedoch einen hohen Platzbedarf haben. Zur Erhöhung der Biegefähigkeit solcher Schleifen ist es bekannt (DE-B-1 525 842), die Rohrleitung im Bereich der Schleife in mehrere zueinander parallele Verbindungsrohre geringeren Durchmessers aufzuteilen, was jedoch insbesondere für Flüssigmetall führende Leitungen verschiedene strömungs- und fertigungstechnische Probleme aufwirft.

Ferner ist aus der FR-A-2 173 276 eine Doppelrohrkonstruktion bekannt, mittels derer die Dampfleitung eines Kernreaktors beim Durchtritt durch einen äußeren Betonbehälter den unterschiedlichen Wärmedehnungen zwischen diesem und dem eigentlichen Druckbehälter folgen kann, wobei in einer von mehreren vorgeschlagenen Ausführungsformen der doppelwandig ausgeführte Teil der Leitung auch gebogen sein kann.

Aufgabe der vorliegenden Erfindung ist eine Bogenverbindung zweier Rohrleitungen bzw. einer Rohrleitung mit einem Behälter, die eine hohe Elastizität aufweist und so auf geringstem Raum den Ausgleich erheblicher Wärmedehnungen in Rohrleitungen erlaubt. Die Verbindung soll darüberhinaus auch den anderen an eine Rohrleitung zu stellenden Forderungen genügen, z. B. in Bezug auf die Prüfbarkeit, auch nach einem gewissen Betriebszeitraum. Den Dehnungsausgleich in die bogenförmigen Verbindungen zweier im Winkel zueinander angeordneter Rohrleitungen oder auch eines Behälters mit einer nicht geometrisch normal in denselben mündenden Rohrleitung zu verlegen bietet sich an, da solche Bögen ohnehin biegsamer sind als gerade Rohrstücke.

Die Lösung der Aufgabe erfolgt durch die im kennzeichnenden Teil des 1. Anspruches vorgeschlagenen Merkmale. Das Verbinden koaxial zueinander angeordneter Rohrstücke verschiedenen Durchmessers an ihren Enden mittels halbtorusförmiger Verbindungsstücke ist aus der DE-C-2 259 584 bekannt, wo es sich allerdings um eine elastische Durchführung von Rohrleitungen durch die Wand eines Kernreaktorsicherheitsbehälters handelt. Bei der vorgeschlagenen Bogenverbindung sind die einzelnen Rohrbögen gewissermaßen in Serie geschaltet und von außen angreifende Kräfte oder Momente durchlaufen dieselben nacheinander und beanspruchen sie in gleichem Maße. Die Verformung der gesamten Verbindung ergibt sich aus der Summe der Einzelverformungen für jeden Rohrbogen, wie sie der Fachmann mit Hilfe der bekannten Verfahren berechnen kann, die z. B. in H. Hampel: »Rohrleitungsstatik«, Berlin 1972, S. 128 ff. dargestellt sind.

Wie im 2. Anspruch vorgeschlagen, beträgt die Anzahl der ineinandergeschalteten Rohrbögen drei, fünf, sieben usw.; wenn zwei Rohrleitungen miteinander verbunden werden. Wird dagegen eine Rohrleitung mit einem Behälter verbunden, so beträgt die Anzahl der ineinandergeschachtelten Rohrbögen entsprechend dem 3. Anspruch zwei, vier, sechs usw.

Die nach dem 4. Anspruch zwischen den Rohrbögen und den halbtorusförmigen Verbindungsstücken einzuschaltenden geraden Rohrstücke haben die Aufgabe, die unterschiedliche elliptische Verformung der Rohrbogenquerschnitte auszugleichen bzw. erst zu ermöglichen, da diese durch eine unmittelbare Befestigung an den Verbindungsstücken behindert wird. Bei einem dreischaligen Rohrbogen ist z. B. die Verformung der mittleren Schale gegenüber der äußeren und inneren Schale um 90° versetzt.

Die im 5. Anspruch vorgeschlagene kegelstumpfförmige Ausgestaltung der geraden Rohrstücke bewirkt, daß bei nur unwesentlich vergrößerten Abmessungen ein größerer Weg für die Verbiegung zur Verfügung steht als bei Verwendung zylindrischer Rohrstücke, bei allerdings erhöhtem Fertigungsaufwand.

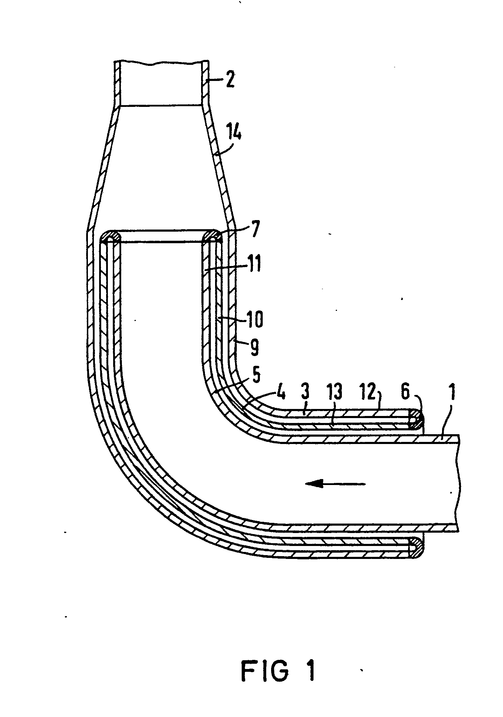

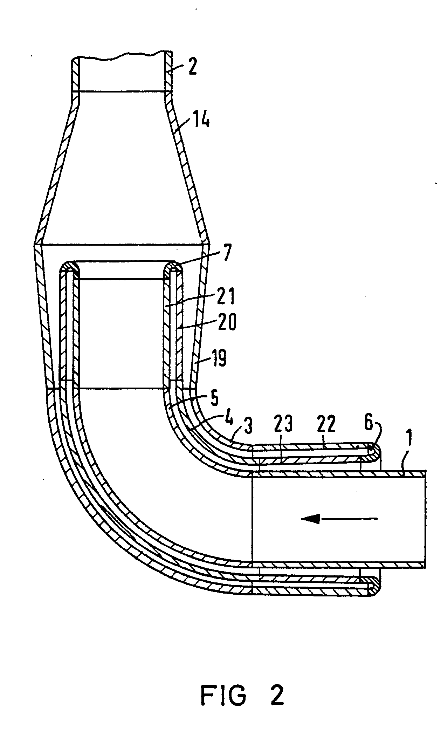

Zwei Ausführungsbeispiele der Erfindung sind in der Zeichnung dargestellt, und zwar zeigen beide Figuren einen 90°-Rohrbogen im Axial-Längsschnitt. Es ist selbstverständlich auch möglich, andere Verbindungen, z. B. auch solche mit einem 180°-Winkel herzustellen. Eine erste Rohrleitung 1 ist mit einer im rechten Winkel dazu angeordneten zweiten Rohrleitung 2 zu verbinden, wobei die Strömungsrichtung von der ersten in die zweite Rohrleitung angenommen wird. Die Verbindung besteht im Beispiel aus drei ineinander und vorzugsweise koaxial zueinander angeordneten Rohrbögen 3, 4, 5, wobei der innere Rohrbogen 5 an seinem einen Ende mit der ersten Rohrleitung 1 und der äußere Rohrbogen 3 an seinem einen Ende über ein kegeliges Zwischenstück 14 mit der zweiten Rohrleitung 2 verbunden ist. An seinem freien Ende ist (Fig. 1) an den inneren Rohrbogen 5 ein gerades, zylindrisches Rohrstück 11 angesetzt und an das freie Ende des äußeren Rohrbogens 3 ein weiteres gerades, zylindrisches Rohrstück 12. Der mittlere Rohrbogen 4 weist an beiden Enden ebenfalls gerade, zylindrische Rohrstücke 10 bzw. 13 von gleicher Länge wie die vorigen auf. Die geraden Rohrstücke 12 und 13 bzw. 10 und 11 sind durch halbtorusförmige (im Querschnitt U-förmige) Verbindungsstücke 6 bzw. 7 miteinander verbunden. Der Begriff Torus soll in diesem Zusammenhang auch solche ringförmigen Körper umfassen, deren Querschnitt von der reinen Kreisform abweicht, z. B. elliptisch ist. Der Abstand der Rohrbögen untereinander ist so bemessen, daß sie bzw. die an sie anschließenden geraden Rohrstücke bei den zu erwartenden Verbiegungen nicht aneinander zum Anliegen kommen. Dies wird in einer alternativen Ausführungsform (Fig. 2) durch die kegelstumpfförmige Ausbildung einiger der geraden Rohrstücke erreicht, die hier mit 19, 22, 23 bezeichnet sind, während die übrigen, hier 20, 21 zylindrisch sind. Die Öffnung des Kegelstumpfes ist dabei auf die den Rohrbögen 3, 4, 5 gegenüberliegende Seite gesetzt. Bei einer druckführenden Rohrleitung werden der äußere Rohrbogen 3 und der innere Rohrbogen 5 von innen, der mittlere Rohrbogen 4 jedoch von außen belastet, was bei der Bemessung der Wandstärke desselben zu berücksichtigen ist. Der Abstand zwischen innerem Rohrbogen 5 und mittlerem Rohrbogen 4 und den an sie anschließenden geraden Rohrstücken kann so bemessen sein, daß in den dazwischenliegenden Spalt Inspektionsgeräte, z. B. zum Überprüfen der die einzelnen Rohrstücke miteinander verbindenden Schweißnähte eingeführt werden können. Bei Bedarf kann an geeigneten Stellen (hier im Verbindungsstück 6) eine hier nicht dargestellte Ablaßöffnung vorgesehen werden, um die den Zwischenraum zwischen einzelnen Rohrbögen ausfüllende Flüssigkeit abzuziehen. Bei anderer, z. B. auf den Kopf gestellter Anordnung, kann eine Ablaßöffnung zum Entgasen der Rohrverbindung dienen.

Es ist unmittelbar zu ersehen, daß der Mehrbedarf an Platz für die vorgeschlagene Bogenverbindung gegenüber einem einfachen Rohrbogen nur sehr gering ist. Bei einer Rohrleitung der Nennweite (NW) 550 mit einer Wanddicke von 10 mm (die auch für den inneren Rohrbogen 5 gilt) und einem Abstand der einzelnen Rohrbögen untereinander von 20 mm ergibt sich ein Zuwachs an Biegeelastizität von rund 100% gegenüber der einfachen Bogenverbindung.

## Patentansprüche

1. Bogenverbindung für Rohrleitungen und/ oder Behälter aus einer Zahl von ineinandergeschachtelten, im Abstand voneinander vorzugsweise koaxial angeordneten Rohrbögen (3, 4, 5) dadurch gekennzeichnet, daß der äußerste (3) Rohrbogen an seinem einen Ende mit einer zweiten Rohrleitung (2) bzw. einem Behälter, und der innersten Rohrbogen (5) an seinem einen Ende mit einer ersten Rohrleitung (1) verbunden ist, wobei die Rohrbögen (3, 4, 5) an ihren nicht mit den Rohrleitungen bzw. dem Behälter verbundenen Enden mit Hilfe halbtorusförmiger Verbindungsstücke (6, 7) mit jeweils dem nächstinneren (5) und/oder dem nächstäußeren Rohrbogen (3) verbunden sind.

2. Verbindung nach Anspruch 1 zwischen zwei Rohrleitungen, dadurch gekennzeichnet, daß die Zahl der Rohrbögen ungerade und größer als eins ist.

3. Verbindung nach Anspruch 1 zwischen einer Rohrleitung und einem Behälter, dadurch gekennzeichnet, daß die Zahl der Rohrbögen gerade ist.

4. Verbindung nach Anspruch 2 oder 3, dadurch gekennzeichnet, daß zwischen den Rohrbögen (3, 4, 5) und den halbtorusförmigen Verbindungsstücken (6, 7) sowie zwischen dem äußersten Rohrbogen (3) und der zweiten Rohrleitung (2) bzw. dem Behälter jeweils gerade Rohrstücke (9, 10, 11, 12, 13, 19, 20, 21, 22, 23) angeordnet sind.

5. Verbindung nach Anspruch 4, dadurch gekennzeichnet, daß die äußeren geraden Rohrstücke (19, 22, 23) kegelstumpfförmig ausgebildet sind und an dem Ende mit dem geringeren Durchmesser an einen Rohrbogen (3, 4) anschließen.

## Claims

1. A bend connection for pipelines and/or containers comprising a plurality of pipe bends (3, 4, 5) which are fitted into one another and are preferably coaxially arranged and spaced from one another, characterised in that the outermost (3) pipe bend is connected to a second pipeline (2), or a container, at its one end, and the innermost pipe bend (5) is connected to a first pipeline (1) at its one end, and at their ends which are not connected to the pipelines or the container, the pipe bends (3, 4, 5) are connected to the next innermost (5) and/or the next outermost pipe bend (3) by means of semitoroidal connecting pieces (6, 7).

2. A connection as claimed in claim 1 between two pipelines, characterised in that the number of the pipe bend is odd and greater than one.

3. A connection as claimed in claim 1 between a pipeline and a container, characterised in that the number of the pipe bends is even.

4. A connection as claimed in claim 2 or 3, characterised in that straight pipepieces (9, 10, 11, 12, 13, 19, 20, 21, 22, 23) are arranged between the pipe bends (3, 4, 5) and the semitoroidal connecting pieces (6, 7) and between the outermost pipe bend (3) and the second pipeline (2) or the container.

5. A connection as claimed in claim 4 characterised in that the outher straight pipe pieces (19, 22, 23) are frustoconical and are joined to a pipe bend (3, 4) at the end having the smaller diameter.

## Revendications

1. Raccord coudé de tuyauterie et/ou de récipients constitué d'un certain nombre de coudes (3, 4, 5) tubulaires emboîtés les uns dans les autres et disposés, de préférence coaxialement, à distance les uns des autres, caractérisé en ce que l'une des extrémités du coude (3) tubulaire le plus à l'extérieur communique avec un second tuyau (2) ou avec un récipient, et l'une des extrémités du coude (5) tubulaire le plus à l'intérieur communique avec un premier tuyau (1), les extrémités, ne communiquant pas avec les tuyaux ou avec le récipient, des coudes (3, 4, 5), communiquant par des pièces (6, 7) de jonction en forme de demi-tore avec respectivement le coude (5) tubulaire le plus à l'intérieur et avec le coude (3) tubulaire le plus à l'extérieur.

2. Raccord suivant la revendication 1 entre deux tuyaux, caractérisé en ce que le nombre de coudes tubulaires est impair et supérieur à un.

3. Raccord suivant la revendication 1 entre un tuyau et un récipient, caractérisé en ce que le nombre des coudes tubulaires est pair.

4. Raccord suivant la revendication 2 ou 3, caractérisé en ce que des tronçons (9, 10, 11, 12, 13, 19, 20, 21, 22, 23) droits de tuyaux sont interposés entre les coudes (3, 4, 5) tubulaires et les pièces (6, 7) de jonction en forme de demi-tore ainsi qu'entre le coude (3) tubulaire le plus à l'extérieur et le second tuyau (2) ou le récipient.

5. Raccord suivant la revendication 4, caractérisé en ce que les tronçons (19, 22, 23) de tuyaux droits les plus à l'extérieur sont tronconiques et sont raccordés à un coude (3, 4) par leur extrémité de plus petit diamètre.

FIG 1

FIG 2